# EUROPEAN PATENT APPLICATION

(11) **EP 2 557 342 A1**
(43) Date of publication of application: **13.02.2013**
(21) Application number: 11764968.1
(22) Date of filing: 06.04.2011
(51) Int. Cl.: F16K 31/05

(54) **IMPROVEMENT TO A VALVE ACTUATION MECHANISM**

(30) Priority: 09.04.2010 BR PI1001183
(71) Applicant: Coester, Oskar Hans Wolfgang, CEP: 91760-220 Porto Alegre- RS (BR)
(72) Inventor: Coester, Oskar Hans Wolfgang, CEP: 91760-220 Porto Alegre- RS (BR)
(74) Representative: Tischner, Oliver
(86) International application number: PCT/BR2011/000100
(87) International publication number: WO 2011/123917

(57) **Abstract**

The invention relates to an improvement to a mechanism for actuating valves or other control mechanisms, either manually or by means of an electric/electronic, pneumatic or hydraulic actuator, rendering the mechanism independent and dispensing with specific controls. The redundant actuation mechanism comprises a reduction gear (1) with epicyclic gearing, coupled to the top of the shaft (2) of the shut-off component (3) and attached to the body of the valve (4). A cover (5) is mounted on the body of the reduction gear (1). The reduction gear (1) comprises an endless screw (11) with a flywheel (12) at the end thereof for manually actuating the valve. The endless screw (11) meshes tangentially with the outside of the ring gear (13) of the epicyclic gearing. Three pinions (14) interconnected by a central gear (15) rotate inside the ring gear (13). The shafts (16) of the pinions (14) are supported at the lower end by bearings in the hub (7), which is provided with a seat that accommodates the six-sided end of the valve shaft (2), and with a top plate (17) that closes the epicyclic gearing. The hub (7) slides angularly inside the body of the reduction gear (1), while the ring gear (13) slides angularly on a step in the top opening of the body of the reduction gear (1). The valve (4) can be actuated by an actuator (6), to the output shaft (61) of which the central gear (15) that drives the pinions (14) of the epicyclic gearing is attached. The valve (4) can be manually actuated when the actuator (6) is withdrawn, and the central gear (15) is attached to the locking key (8), the end of which is screwed into the top plate (17).

## Description

The invention relates to an improvement to a mechanism for actuating valves or other control mechanisms, either manually or by means of an electric/electronic, pneumatic or hydraulic actuator, rendering the mechanism independent and dispensing with specific controls.

In facilities such as plants, oil refineries, petrochemical complexes and other similar units, safety is a constant concern. Control redundant instruments are usually deployed in such a way that a failure of one mechanism is automatically compensated by the immediate actuation of another. However, in some cases, this control chain can be disrupted, or be mistakenly actuated by human failure, thus representing a risk of serious damage to the facilities and to operators. These accidents may result in aggression to the environment in the form of, for example, oil or other raw material spills from refineries and petrochemical complexes.

On the other hand, the industrial apparatus as a rule employs electric, pneumatic or hydraulic instruments which in turn are controlled by programmable or non- programmable electric/electronic devices.

The industrial apparatus is generally deprived from a control mechanism that while enabling the removal of the actuator makes it possible to manually control the device concerned. When the electric or pneumatic actuator is removed, the mechanisms which move the shaft become loose and their manual operation becomes impossible. This situation is recommended when the actuator is disabled, even if it were for a short time for maintenance purposes, for example, during the replacement of a damaged actuator for another in operating conditions.

Also during power outages, it might be necessary to move one valve or control mechanism which actuator is disabled.

An example of manual actuation and actuation through an electric actuator is described in patent document PI 0304095-0, which valve is an angular-type one, being provided with a castle with a protruding shaft with a flywheel at the top end thereof and with a shut-off component attached to the shaft lower end. For the operation of the valve, the shaft of the shut-off component shall turn several times, approaching or moving away the shut-off component from the valve seat. On the shaft of the shut-off component, above the castle, a ring gear is attached, with which an electric motor-actuated pinion is geared. As a result, the angular valve can be electrically actuated by the electric motor and manually actuated by the flywheel. This redundant actuation mechanism is limited only to those valves which shaft shifts axially and which shall turn several times, since it employs an electric ring-and pinion-type actuator. This redundant actuation mechanism is not applicable to valves which shut-off component carries out a maximum 90° rotation, as occurs with the butterfly valves..

The patent document PI 0405271-4 also exemplifies a valve redundant actuation mechanism which employs a manual flywheel and an electric actuator. This mechanism is not applicable directly to the valve shaft, requiring a 90° reduction gear to connect the shaft's electric actuator. In addition, the actuation modes are interdependent in such a way that when one e is actuated the other is simultaneously actuated as well, since both of them are coupled to the common shaft.

The object of the present invention is therefore the improvement on a redundant actuation mechanism of valves and other control mechanisms capable of effectively solving the referred limitations of the state of the art. The improvement on the redundant actuation mechanism comprises a reduction gear with epicyclic gearing, coupled to the top of the shaft of the shut-off component and attached to the body of the valve. The electric actuator is mounted on the body of the reduction gear. The reduction gear comprises an endless screw with a flywheel at the end thereof to manually actuate the valve, being that the endless screw meshes tangentially with the outside of the ring gear of the epicyclic gearing. Three pinions rotate inside the ring gear interconnected by a central gear which is attached to the end of the output shaft of the electric actuator.

The improvement on the redundant actuation mechanisms of valves and other control mechanisms result in the following advantages over the mechanisms of the state of the art:
- is directly mounted to and axially arranged on the valve shaft, thus making the assembly simple;
- may be coupled to any type of valve or control mechanism, regardless of the number of rotations required in its actuation shaft;
- due to the epicyclic gearing mechanism, the manual and electric actuation modes are independent and do not require any coupling or uncoupling mechanism;
- renders the assembly and removal of the actuator very practical, making the maintenance and replacement of the actuator very easy;
- even with the removal of the actuator, the manual actuation mechanism remains operational, requiring only the assembly of a central gear in the epicyclic gearing mechanism.

The improvement of the redundant actuation mechanism of valves and other control mechanisms, object of the present invention, may be better understood by the following detailed description, which is based on the drawings attached and listed below, which shall not be considered restricted to the invention.
Figure 1 - view of the actuation mechanism mounted on a butterfly valve;
Figure 2 - exploded view of the actuation mechanism;
Figure 3 - partial and sectional view of the reduction gear mounted on the actuator;
Figure 4 - partial and sectional view of the reduction gear with manual actuation.

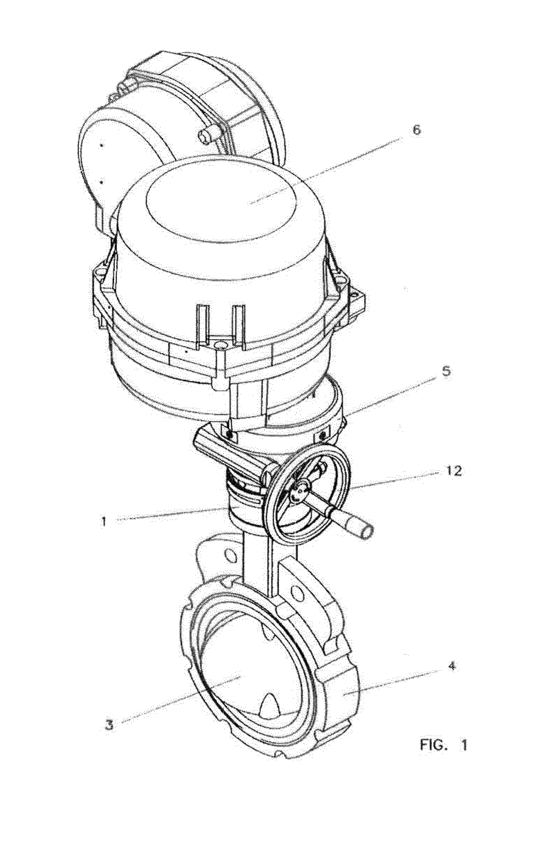

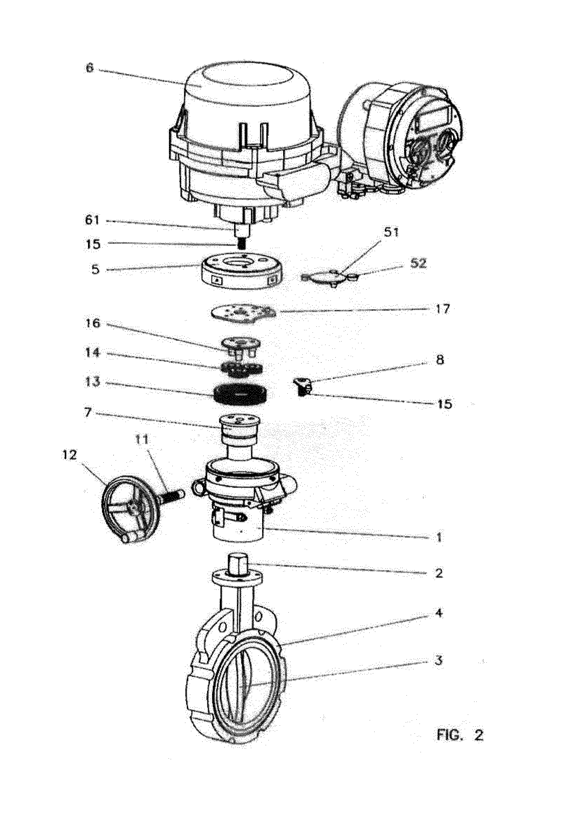

Figures 1 and 2 show a preferred embodiment of the redundant actuation mechanism comprising a reduction gear (1) with epicyclic gearing, which is coupled to the top of the shaft (2) of the shut-off component (3) and attached to the body of the valve (4). A cover (5) is mounted on the body of the reduction gear (1) with perforations to allow the passing of the shaft (61) of the electric actuator (6) and of the holding screws. The reduction gear (1) is provided with an endless screw (11) with a flywheel (12) the end thereof for manually actuating the valve, the endless screw (11) meshes tangentially with the outside of the ring gear (13) of the epicyclic gearing. Three pinions (14) rotate inside the ring gear (13). interconnected by a central gear (15) mounted on the end of the output shaft (61) of the electric actuator (6). The shafts (16) of the pinions (14) are supported at the lower end by bearing in the hub (7), which is provided with a seat that accommodates the six-sided end of the valve shaft (2), and with a top plate (1&) that closes the epicyclic gearing. The hub (7) slides angularly inside the body of the reduction gear (1), while the ring gear (13) slides angularly on a step in the top opening of the body of the reduction gear (1).

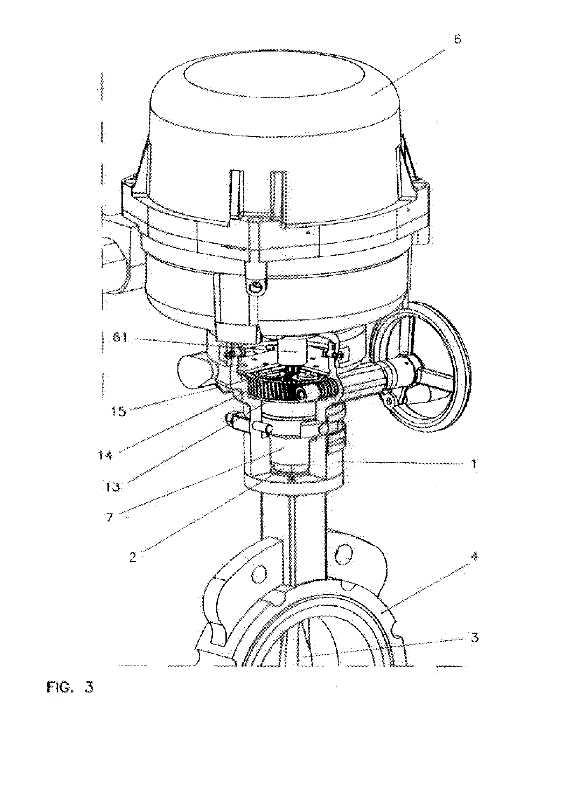

The operation of the valve (4) when actuated by the actuator (6) is also illustrated by figure 3, as follows:
- the central gear (15) at the end of the actuator shaft (61) precisely meshes with the three pinions (14);
- when the shaft (61) is actuated, the three pinions (14) rotate simultaneously inside ring gear (13), since they are meshed with their internal teeth;
- the angular shift of the pinions (14) leads the hub (7) to slide angularly inside the body of the reduction gear (1), making the valve shaft (2) rotate and, thus, angularly move the shut-off component (3) of the valve (4).

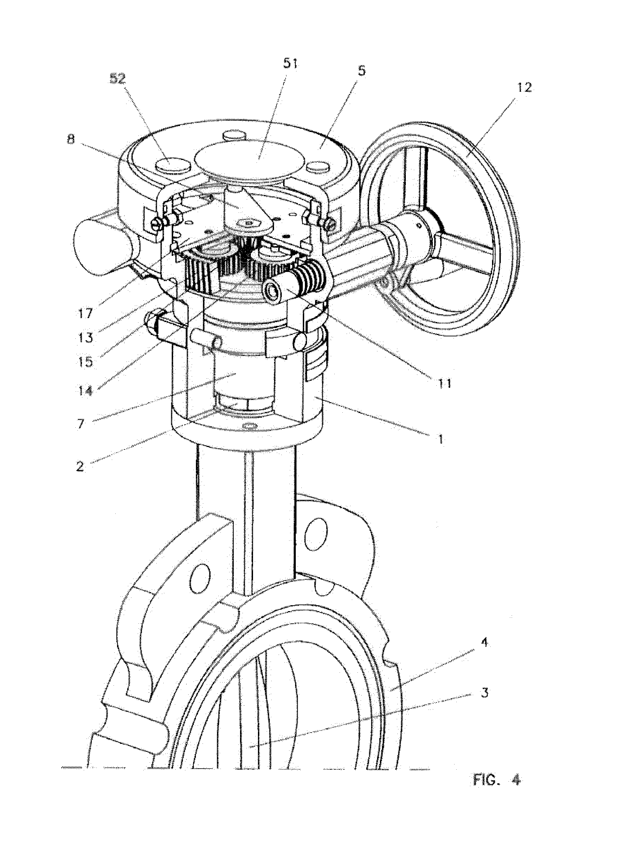

The valve (4) can be manually actuated when the actuator (6) is removed, which operation is also illustrated in figure 4:
- the perforation of the cover (5) of the body of the reduction gear (1) is closded through disks (51 and 52);
- the central gear (15) is attached on the locking key (8) which end is screwed to the top plate (17);
- when the flywheel (12) is actuated, the endless screw (11) rotates, forcing the ring gear (13) to slide angularly on the step of the body of the reduction gear (1);
- the angular movement of the ring gear (13) makes the pinions (14) slide onto their internal teeth and also onto the central gear (15);
- the shift of the pinions (14) makes the hub (7) angularly slide inside the body of the reduction gear (1), making the valve shaft (2) rotate and, thus, angularly move the shut-off component (3) of the valve (4).

Despite the drawings and the description of the invention always refer to the movement of the valve shaft, the improvement on the redundant actuation mechanism may be used to angularly move any other control mechanism, not being limited only to the command of the valve.

## Claims

1. IMPROVEMENT TO A VALVE ACTUATION MECHANISM, wherein:
- one reduction gear (1) with epicyclic gearing mechanism, coupled to the top of the shaft (2) of the shut-off element (3) and attached to the valve body (4);
- one cover (5) mounted on the body of the reduction gear (1);
- one endless screw (11) which meshes tangentially with the outside of the ring gear (13), which slides angularly on a step in the top opening of the body of the reduction gear (1);
- three pinions (14) interconnected by a central gear (15), rotate inside the ring gear internal teeth (13) and the shafts (16) of the pinions (14) are supported by bearings in the hub (7) and on a top plate (17) which closes the epicyclic gearing;
- one hub (7) slides angularly inside of the body of the reduction gear (1) and is provided with a seat which accommodates the six-sided end of the valve shaft (2).

2. IMPROVEMENT TO A VALVE ACTUATION MECHANISM according to claim 1, wherein a central gear (15) is attached to the end of the actuator shaft (61).

3. IMPROVEMENT TO A VALVE ACTUATION MECHANISM according to claim 1, wherein a central gear (15) attached to the locking key (8) the end of which is screwed into the top plate (17).
